# EUROPÄISCHE PATENTANMELDUNG

(11) **EP 0 898 243 A2**
(43) Veröffentlichungstag der Anmeldung: **24.02.1999**
(21) Anmeldenummer: 98114428.0
(22) Anmeldetag: 01.08.1998
(51) Int. Cl.: G06K 13/08

(54) **Transportvorrichtung**

(30) Priorität: 08.08.1997 DE 29714163 U
(71) Anmelder: GUNTHER LOUDA GmbH, D-82041 Oberhaching (DE)
(72) Erfinder: Die Erfindernennung liegt noch nicht vor
(74) Vertreter: Charrier, Rolf, Dipl.-Ing.

(57) **Zusammenfassung**

Die Erfindung betrifft eine Transportvorrichtung zum Transport von Wert- und/oder Personalkarten enthaltend: Magazin (3), die zu verschiedenen Fertigungs- und Kontrollstationen (7) transportiert werden, wo die Karten den Magazinen (3) entnommen und nach ihrer Verarbeitung den Magazinen (3) wieder zugeführt werden. Derartige Transportvorrichtungen besitzen ein hohes Diebstahlrisiko für Karten und weisen gelegentlich Fehlleitung Von Maganzinen auf.

Die Aufgabe, eine Transportvorrichtung so auszubilden, daß Diebstähle weitgehend ausgeschlossen werden und eine Fehlleitung von Magazinen vermieden wird, wird dadurch gelöst, daß die Transportvorrichtung aus Hängebahnen (5) besteht, mit deren Transporthänger (4) die Magazine (3) lösbar verklinkbar sind, an mindestens einigen der Fertigungs- und Kontrollstationen (7) von da Stationen (7) zu den Transporthängern (4) verlaufende vertikale Lifte (1) vorgesehen sind, die die Magazine (3) zwischen der jeweiligen Station (7) und den Transporthängern (4) transportieren, die Magazine (3) einen les- und beschreibbaren Transponder (13) aufweisen, im Transponder (13) das Fertigungslos der im Magazin (3) enthaltenen Karten und mindestens die nächste Zielstation gespeichert ist und die Steuerung der Weichen der Hängebahnen (5) in Abhängigkeit der gespeicherten nächsten Zielstation erfolgt.

## Beschreibung

Die Neuerung betrifft eine Transportvorrichtung zum Transport von Wert- und/oder Personalkarten enthaltenden Magazinen nach dem Oberbegriff des Anspruches 1.

Der Transport von Wert- und/oder Personalkarten, wie beispielsweise Telefonkarten, Kreditkarten und Zugangskontrollkarten, von einer Fertigungsstation zur nächsten Fertigungsstation erfolgt mittels Magazine, in denen die Karten gestapelt sind. Der eigentliche Transport wird durch Transportkarren bewirkt, in denen diese Magazine aufgestellt sind. Da die Karten je nach Fertigungslos unterschiedlichen Bearbeitungsschritten unterworfen werden, kommt es beim Transport häufig zu Verwechslungen. Auch ist unvermeidlich, daß unbefugt aus den Magazinen Karten entnommen werden. Dies gilt insbesondere für Wertkarten, insbesondere für Telefonkarten. Der Diebstahl von Zugangskontrollkarten kann zu erheblichen Sicherheitsrisiken führen.

In der Zeitschrift 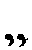 Logistik im Unternehmen", Juni 1990, Seiten 10 bis 12 ist eine Materialflußsteuerung bei Karosserieteilen beschrieben, bei welcher freiprogrammierbare, produktbegleitende Datenträger an Fördergehängen von Elektrohängebahnen angeordnet sind. In den Datenträger werden teilespezifische Informationen eingegeben, die von Schreib- und Lesegeräten erfaßt werden. Diese Daten werden einer Anlagesteuerung übertragen und dort ausgewertet. Die ausgewerteten Daten bestimmen dann die Weichenstellung der Elektrohängebahnen und somit die nächste Fertigungsstelle, zu der ein zu bearbeitendes Teil transportiert wird.

Es besteht die Aufgabe, die Transportvorrichtung so auszubilden, daß Diebstähle von Karten weitgehend ausgeschlossen werden und eine Fehlleitung von Magazinen ausgeschlossen wird.

Gelöst wird diese Aufgabe mit den Merkmalen des Anspruches 1. Vorteilhafte Ausgestaltungen sind den Unteransprüchen entnehmbar.

Ausführungsbeispiele werden nachfolgend anhand der Zeichnungen näher erläutert. Es zeigen:
- **Fig. 1**: die Seitenansicht eines auf dem Boden installierten Lifts bei manueller Übergabe der Magazine;
- **Fig. 2**: einen am Boden installierten Lift zur automatischen Übergabe der Magazine bei einer Bearbeitungsstation;
- **Fig. 3**: einen der Figur 1 entsprechenden Lift bei Wand- oder Deckenmontage;
- **Fig. 4**: ein der Figur 2 entsprechenden Lift ebenfalls bei Wand- oder Deckenmontage;
- **Fig. 5**: eine teilweise im Schnitt dargestellte Seitenansicht eines Magazins mit im Schnitt dargestellter Hängebahn:
- **Fig. 6**: eine perspektivische Ansicht eines Magazins und eines Magazinhakens der Hängebahn;

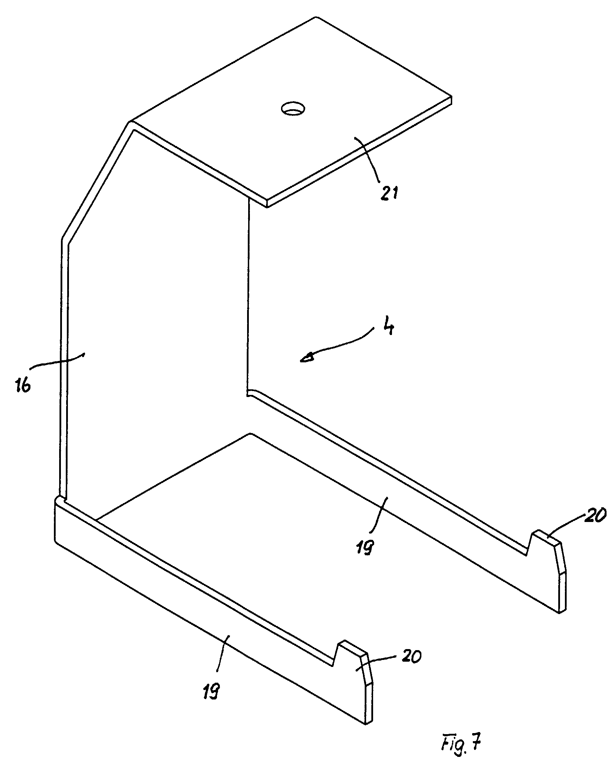

- **Fig. 7**: eine perspektivische Ansicht des Magazinhakens; und
- **Fig. 8 a, b und c**: Ansichten und Draufsicht einer Fertigungs- oder Kontrollstation mit Magazinpuffer.

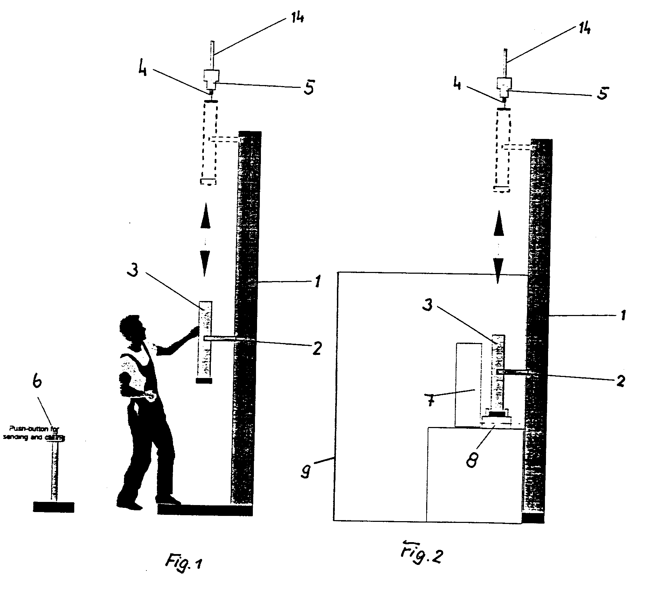

Die Figur 1 zeigt einen am Boden befestigten vertikalen Lift 1 mit einem in Richtung des Doppelpfeils auf- und abbewegbaren Greifer 2. Dem Greifer 2 wird von einer Bedienungsperson ein Magazin 3 übergeben, welches sodann nach oben bewegt wird und über einen Verklinkungsmechanismus mit einem Transporthänger 4 verklinkt, der von einer Hängebahn 5 geführt wird, die an der Decke befestigt ist. Die Steuerung des Greifers 2 erfolgt durch einen Bedienpult 6. Die Hängebahn 5 ist über einen Träger 14 an der Decke befestigt, der in einen Schlitz 15 an der Hängebahn 5 einschiebbar ist.

Diese einfachste Ausführungsvariante nach Figur 1 findet Anwendung bei noch nicht werthaltigen Wertkarten oder bei noch nicht verschlüsselten Personalkarten.

Bei der Anordnung nach Figur 2 ist der Lift 1 mit Greifer 2 neben einer Fertigungs- oder Kontrollstation 7 angeordnet. Zwischen der Station 7 und dem Lift 1 befindet sich im Bewegungsbereich des Greifers 2 ein Horizontalförderer 8. Diesem Horizontalförderer 8 werden die Magazine 3 übergeben bzw. von ihm abgenommen und dem Eingang der Station 7 zugeführt bzw. vom Ausgang der Station 7 übernommen. Bei bereits werthaltigen Wertkarten bzw. bei bereits verschlüsselten Personalkarten ist die Station 7 einschließlich des Bereichs des Greifers 2 von einem oben offenen Schacht 9 umgeben, der einen Zugriff auf die Magazine 3 und die Karten verhindert. Dieser Schacht 9 ist zu Wartungszwecken verschließbar.

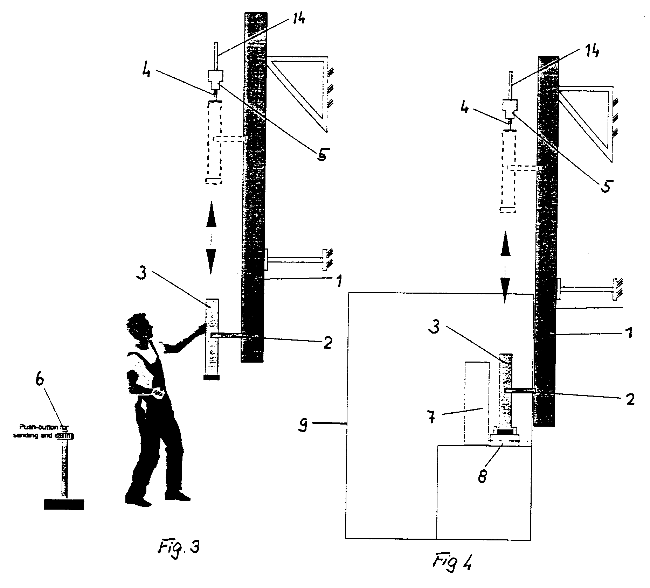

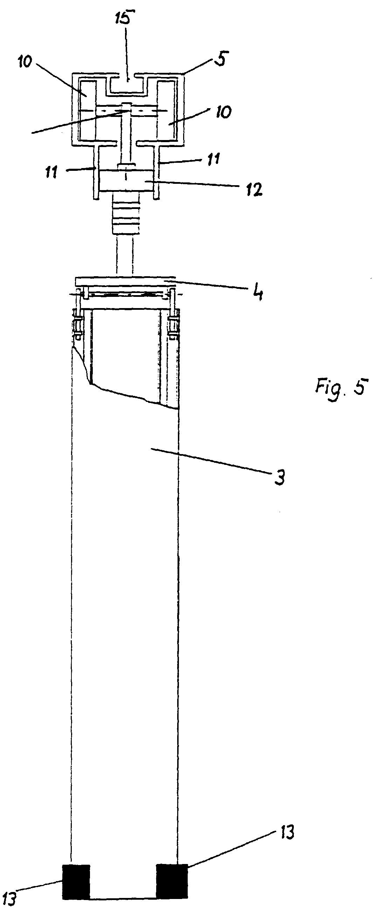

Die Lifte nach den Figuren 3 und 4 entsprechen denjenigen nach den Figuren 1 und 2 mit Ausnahme, daß die Lifte 1 nicht mehr auf dem Boden angeordnet, sondern an der Decke bzw. einer Wand befestigt sind.

Gemäß Figur 5 wird das Magazin 3 vom Transporthänger 4 getragen, der in einer Hängebahn 5 geführt ist. Bei der Hängebahn handelt es sich um eine sog. C-Schiene, welche innenseitig zwei Tragrollen 10 des Transporthängers 4 lagert, wobei die C-Schiene zwei vertikale Führungsschenkel 11 aufweist, zwischen denen eine Führungsrolle 12 geführt ist.

Das Magazin 3 weist an seiner Unterseite schreib- und lesbare Transponder 13 auf. Diese Transponder 13 speichern das Fertigungslos der im Magazin 3 enthaltenen Karten und die nächste Zielstation, zu der das Magazin 3 transportiert werden soll. Außerdem kann die Stückzahl der im Magazin enthaltenen Karten gespeichert sein. In Abhängigkeit der gespeicherten nächsten Zielstation können die Weichen der Hängebahn angesteuert werden. Die längs der Hängebahn 5 verfahrbaren Magazine können zu Zügen miteinander verkettet werden, bevorzugt in Abhängigkeit der nächsten gemeinsamen Zielstation. Auf diese Weise kann ein Zug aus Magazinen auch einen Tresorraum ansteuern, in welchem die aufgehängten Magazine temporär aufbewahrt werden. Dies ist erforderlich, da die verschiedenen Fertigungs- und Kontrollstationen unterschiedliche Kapazitäten aufweisen.

An den Fertigungs- und Kontrollstationen können Kartenzählwerke vorgesehen sein, wobei dann die Anzahl der gezählten Karten verglichen wird mit der im Transponder gespeicherten Stückzahl.

Das bei einer Station erfaßte Fertigungslos und die Kennung dieser Station können dazu dienen, mittels eines Rechners den Code der nächsten Station zu ermitteln, der dann in den Transponder eingegeben wird.

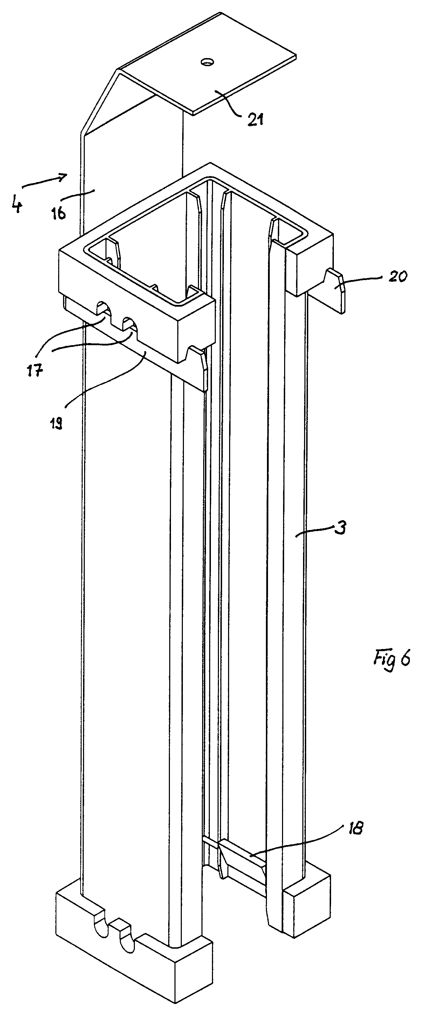

Die Figur 6 zeigt ein Magazin 3, welches von einem Transporthänger 4 gehalten wird. Der Transporthänger 4 weist eine obere horizontale Platte 21 auf, an welche sich eine vertikale Platte 16 anschließt. Von der vertikalen Platte 16 gehen zwei horizontale Arme 19 ab, die an ihren freien Enden hakenförmige Vorsprünge 20 aufweisen. Die Arme 19 untergreifen den vorspringenden oberen Teil des Magazins 3. Dieser vorspringende Teil ist im Bereich der Arme 19 jeweils mit zwei Ausnehmungen 17 versehen, in welche jeweils zwei Bolzen des Greifers 2 eingreifen. Am unteren Ende des schachtförmigen Magazins sind Klinken 18 angeordnet, auf denen die Karten zu liegen kommen.

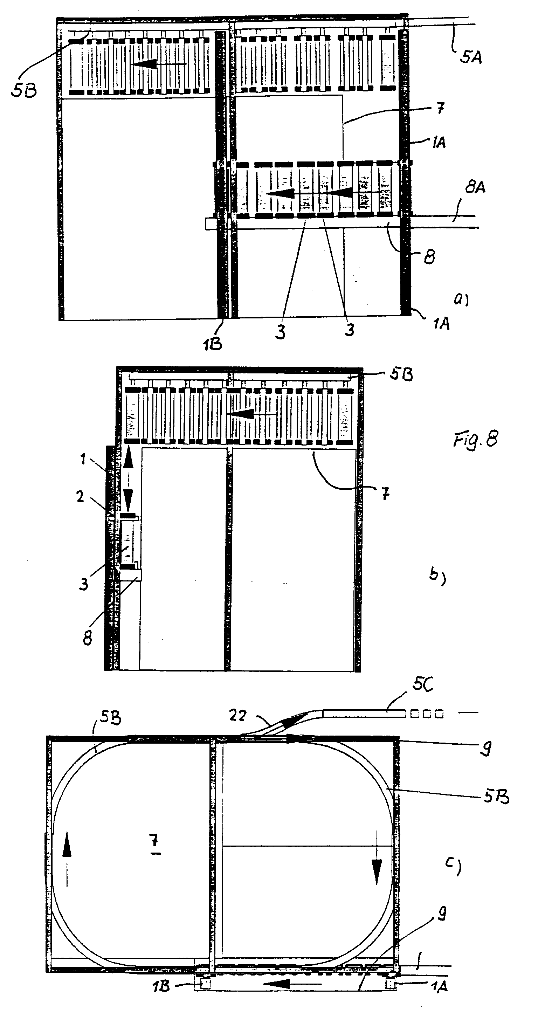

Die Figur 8 zeigt ein Beispiel einer Fertigungs- oder Kontrollstation 7 mit einer Pufferstation für die Magazine 3. Handelt es sich bei den zugeführten Magazinen 3 um leere Magazine, dann werden diese über einen Horizontalförderer 8A dem Horizontalförderer 8 zugeführt. Sind die Magazine 3 gefüllt, dann werden sie dem Lift 1B zugeführt, nach oben gefördert und sodann der Hängebahn 5B übergeben, welche oberhalb der Station 7 angeordnet ist und einen etwa ovalen Verlauf aufweist. Die Weiche 22 wird von den Transpondern 13 gesteuert und einer abführenden Hängebahn 5C übergeben, die zu anderen Fertigungs- oder Kontrollstationen führt.

Sind die zugeführten Magazine 3 bereits mit werthaltigen Karten gefüllt, dann werden diese Magazine über eine Hängebahn 5A zugeführt und oben dem Lift 1A übergeben, der sie nach unten dem Horizontalförderer 8 zuführt. Die weitere Arbeitsweise ist dann die gleiche wie zuvor beschrieben.

## Patentansprüche

1. Transportvorrichtung zum Transport von Wert- und/oder Personalkarten enthaltenden Magazin (3), die zu verschiedenen Fertigungs- und Kontrollstationen (7) transportiert werden, wo die Karten den Magazinen (3) entnommen und nach ihrer Verarbeitung den Magazinen (3) wieder zugeführt werden, **dadurch gekennzeichnet**, daß die Transportvorrichtung aus Hängebahnen (5) besteht, mit deren Transporthänger (4) die Magazine (3) lösbar verklinkbar sind, an mindestens einigen der Fertigungs- und Kontrollstationen (7) von den Stationen (7) zu den Transporthängern (4) verlaufende vertikale Lifte (1) vorgesehen sind, die die Magazine (3) zwischen der jeweiligen Station (7) und den Transporthängern (4) transportieren, die Magazine (3) einen les- und beschreibbaren Transponder (13) aufweisen, im Transponder (13) das Fertigungslos der im Magazin (3) enthaltenen Karten und mindestens die nächste Zielstation gespeichert ist und die Steuerung der Weichen der Hängebahnen (5) in Abhängigkeit der gespeicherten nächsten Zielstation erfolgt.

2. Transportvorrichtung nach Anspruch 1, **dadurch gekennzeichnet**, daß an mindestens einigen Stationen (7) ein Kartenzählwerk angeordnet ist, im Tansponder (13) zusätzlich die Anzahl (3) der im Magazin enthaltenen Karten gespeichert ist und diese Anzahl mit der vom Kartenzählwerk ermittelten Anzahl verglichen wird.

3. Transportvorrichtung nach Anspruch 1 oder 2, **dadurch gekennzeichnet**, daß die Hängebahnen (5) mindestens eine Pufferstation umfassen, in welcher die Magazine (3) geparkt werden.

4. Transportvorrichtung nach einem der Ansprüche 1 bis 3, **dadurch gekennzeichnet**, daß mindestens einige der Lifte (1) durch verschließbare Schächte (9) umgeben sind.

5. Transportvorrichtung nach einem der Ansprüche 1 bis 4, **dadurch gekennzeichnet**, daß ein Rechner vorgesehen ist, der aufgrund des bei einer Station (7) erfaßten Fertigungsloses und der Kennung dieser Station den Code der nächsten Station ermittelt, der in dem Transponder (13) eingegeben wird.
